(19) Europäisches Patentamt
European Patent Office
Office européen des brevets

(11) EP 0 468 594 B1

(12) EUROPEAN PATENT SPECIFICATION

(45) Date of publication and mention
of the grant of the patent:
28.02.1996 Bulletin 1996/09

(51) Int Cl.⁶: **C08G 67/02**, C10M 143/08,
C10M 145/02, C10L 1/18

(21) Application number: 91201941.1

(22) Date of filing: 24.07.1991

(54) **Hydrocarbon oil compositions**

Kohlenwasserstoffölzusammensetzungen

Compositions d'huile d'hydrocarbure

(84) Designated Contracting States:
BE DE ES FR GB IT NL

(30) Priority: 25.07.1990 NL 9001691

(43) Date of publication of application:
29.01.1992 Bulletin 1992/05

(73) Proprietor:
SHELL INTERNATIONALE RESEARCH
MAATSCHAPPIJ B.V.
NL-2596 HR Den Haag (NL)

(72) Inventors:
• Drent, Eit
  1031 CM Amsterdam (NL)
• Tomassen, Henricus Paulus Maria
  1031 CM Amsterdam (NL)
• Reynhout, Marinus Johannes
  1031 CM Amsterdam (NL)

(56) References cited:
EP-A- 0 235 865          EP-A- 0 322 018
EP-A- 0 337 521          EP-A- 0 376 364
EP-A- 0 393 753          GB-A- 1 272 614
US-A- 4 761 453

Remarks:
The file contains technical information submitted
after the application was filed and not included in
this specification

## Description

The invention relates to novel hydrocarbon oil compositions comprising a hydrocarbon oil and a polymeric additive. Hydrocarbon oils such as gas oils, diesel oils, lubricating oils and crude oils can contain considerable amounts of paraffins. When these oils are stored, transported and used at low temperature, problems can occur as a result of crystallization of these paraffins. In order to meet these problems, it is customary to add certain polymers to the paraffinic hydrocarbon oils. Very customary for this purpose are high-molecular copolymers of ethylene and vinyl acetate, which are commercially available under various names. Though these are generally quite satisfactory, they are open to improvement as far as their activity is concerned.

In an investigation by the Applicant concerning the use of polymers as additives in paraffinic hydrocarbon oils for improving the low temperature properties of these oils, a class of polymers has now been found which appears to be outstandingly suitable for lowering the pour point (PP), the cloud point (CP) and/or the cold filter plugging point (CFPP) of these oils. Comparison of the performance of these polymers with that of the above-mentioned ethylene/vinyl acetate copolymers shows that the former polymers possess a higher activity than the commercial additives. This means that, in comparison with the commercial additives, the polymers investigated by the Applicant for this purpose give - at equal concentration - a stronger PP, CP and/or CFPP reduction, or, alternatively, that an equal PP, CP and/or CFPP reduction can be obtained at a lower concentration. These polymers are linear polymers of carbon monoxide with one or more $\alpha$-olefins having at least 10 carbon atoms per molecule (hereinafter referred to as $C_{10+}$ $\alpha$-olefins) and optionally in addition with one or more olefins having fewer than 10 carbon atoms per molecule (below referred to as $C_{9-}$ olefins), in which polymers on the one hand the units originating from carbon monoxide and on the other hand the units originating from the olefins occur in a substantially alternating way. Though some of these polymers are known per se, the use of these polymers as an additive in a paraffinic hydrocarbon oil is novel. A number of the polymers found by the Applicant to be suitable as additives for paraffinic hydrocarbon oils were especially synthesized for this purpose and are novel compounds. These are polymers of carbon monoxide with one or more $C_{10+}$ $\alpha$-olefins, which polymers possess a weight average molecular weight ($\overline{M}_W$), of more than $10^4$. These polymers can be prepared by contacting the monomers, at elevated temperature and pressure and in the presence of a diluent consisting for more than 90 %v of an aprotic liquid, with a catalyst composition containing a Group VIII metal and a phosphorus bidentate ligand having the general formula $(R^1R^2P)_2R$, where $R^1$ and $R^2$ represent identical or different optionally polar substituted aliphatic hydrocarbyl groups and R a bivalent organic bridging group containing at least two hydrocarbon atoms in the bridge linking the two phosphorus atoms.

The present patent application therefore relates to novel hydrocarbon oil compositions comprising a paraffinic hydrocarbon oil and as additive linear polymers of carbon monoxide with one or more $C_{10+}$ $\alpha$-olefins and optionally moreover with one or more $C_{9-}$ olefins in which polymers the units originating from carbon monoxide and the units originating from the olefins occur in an alternating way. The patent application further relates to novel polymers of carbon monoxide with one or more $C_{10+}$ $\alpha$-olefins possessing an $\overline{M}_W$ more than $10^4$, in which polymers on the one hand the units originating from carbon monoxide and on the other hand the units originating from the olefins occur in an alternating way, on the understanding that the $\alpha$-olefin is not exclusively an $\alpha$-olefin having to carbon atoms or exclusively an $\alpha$-olefin having to carbon atoms or exclusively 1-dodecene. Polymers based on each one of the latter $\alpha$-olefin have been mentioned in EP-A-393753 and US-A-4761453 in the context of their use as engineering plastics. The application further relates to a process for the preparation of polymers of carbon monoxide with one or more $C_{10+}$ $\alpha$-olefins possessing an $\overline{M}_W$ of more than $10^4$, in which polymers on the one hand the units originating from carbon monoxide and on the other hand the units originating from the olefins occur in an alternating way, which process comprises contacting the monomers at elevated temperature and pressure and in the presence of a diluent which consists for more than 90 %v of an aprotic liquid with a catalyst composition containing a Group VIII metal and a phosphorus bidentate ligand having the general formula $(R^1R^2P)_2R$.

Finally the application relates to the polymers which are obtainable by this process.

As paraffinic hydrocarbon oils the low-temperature properties of which can be improved according to the invention, mention may be made inter alia of gas oils, diesel oils, lubricating oils and crude oils. Very favourable results were achieved inter alia with the use of the present polymers in paraffinic gas oils. The molecular weight of the polymers which are eligible to be used in the hydrocarbon oil compositions according to the invention may vary between wide limits. By preference, polymers are used having a weight average molecular weight ($\overline{M}_W$), between $10^3$ and $10^6$ and in particular between $10^4$ and $10^5$. The $C_{10+}$ $\alpha$-olefins which are used as monomers in the preparation of the polymers are preferably unbranched. They preferably contain fewer than 40 and in particular fewer than 30 carbon atoms per molecule. The preference for a given molecular weight of the polymers and for a given number of carbon atoms in the $C_{10+}$ $\alpha$-olefins which are used as monomers in their preparation is substantially determined by the nature of the paraffins present in the hydrocarbon oil. Besides $C_{10+}$ $\alpha$-olefins, in the preparation of the polymers $C_{9-}$ olefins such as ethene, propene, butene-1 and cyclopentene can also be used. By preference, in the preparation of the polymers exclusively $C_{10+}$ $\alpha$-olefins are used as olefins. The monomer mixture from which the polymers are prepared may contain both one and more $C_{10+}$

$\alpha$-olefins in addition to carbon monoxide. As examples of copolymers with which very favourable results were achieved in paraffinic hydrocarbon oils, mention can be made of a carbon monoxide/n-tetradecene-1 copolymer and a carbon monoxide/n-hexadecene-1 copolymer. As an example of a very suitable terpolymer for the present purpose, mention can be made of a carbon monoxide/n-tetradecene-1/n-octadecene-1 terpolymer. In addition to separate polymers, mixtures of polymers can also be used in the hydrocarbon oil compositions according to the invention. Thus, for example, very favourable results were achieved by using mixtures of a carbon monoxide/n-tetradecene-1 copolymer with a carbon monoxide/n-hexadecene-1 copolymer in paraffinic hydrocarbon oils. The quantity of polymer which according to the invention is taken up in the paraffinic hydrocarbon oils can vary between wide limits. For preference, 1-10,000 and in particular 10-1,000 mg of polymer is taken up per kg of hydrocarbon oil. In addition to the present polymers, the hydrocarbon oil compositions according to the invention can also contain other additives such as antioxidants, corrosion inhibitors and metal deactivators.

Linear polymers of carbon monoxide with ethylene and with one or more $\alpha$-olefins having at least three carbon atoms per molecule (below referred to as $C_{3+}$ $\alpha$-olefins) in which polymers on the one hand the units originating from carbon monoxide and on the other hand the units originating from the olefins occur in an alternating way and which polymers possess an $\overline{M}_W$ of more than $10^4$ can be prepared at a high reaction rate by contacting the monomers, at elevated temperature and pressure and in the presence of a protic diluent, with a catalyst composition containing a Group VIII metal and a phosphorus bidentate ligand having the general formula $(R^3R^4P)_2R$, where $R^3$ and $R^4$ represent identical or different optionally polar substituted aromatic hydrocarbyl groups and R has the meaning previously indicated. The above-mentioned preparation method has proved to be less suitable for the preparation of polymers of carbon monoxide with one or more $C_{3+}$ $\alpha$-olefins (that is to say, in the absence of ethylene) in which polymers on the one hand the units originating from carbon monoxide and on the other hand the units originating from the olefins occur in an alternating way. Although in this manner polymers of this type such as copolymers of carbon monoxide with propene or with butene-1 can be prepared, this is only possible at a comparatively low reaction rate and with formation of polymers having a comparatively low $\overline{M}_W$. It has meanwhile been found that in the above-mentioned polymerization of carbon monoxide with one or more $C_{3+}$ $\alpha$-olefins considerably higher reaction rates can be achieved and polymers having a considerably higher $\overline{M}_W$ can be obtained by replacing in the catalyst composition the phosphorus bidentate ligand having the general formula $(R^3R^4P)_2R$ by a phosphorus bidentate ligand having the general formula $(R^1R^2P)_2R$ where R, $R^1$ and $R^2$ have the previously indicated meanings.

As has been elucidated above, as regards application as additives in paraffinic hydrocarbon oils to improve the properties of these oils at low temperature, there is above all interest in polymers of the present type based on carbon monoxide with one or more $C_{10+}$ $\alpha$-olefins which polymers possess an $\overline{M}_W$ of more than $10^4$. The Applicant has performed an investigation into the preparation of these polymers. This investigation showed that in the polymerization of carbon monoxide with a $C_{3+}$ $\alpha$-olefin using a catalyst composition containing a phosphorus bidentate ligand having the general formula $(R^1R^2P)_2R$ and in the presence of a protic diluent, a strong decline in the reaction rate and a strong decline in the $\overline{M}_W$ of the resultant polymers occurs, according as the $C_{3+}$ $\alpha$-olefin applied as comonomer contains more carbon atoms per molecule. Although copolymers having a comparatively high $\overline{M}_W$ can be prepared in this way at acceptable reaction rates with the use of propylene and butene-1 as comonomer, if for example octene-1 is used as comonomer it becomes nevertheless extremely difficult to prepare polymers having a high $\overline{M}_W$ at an acceptable reaction rate. On the basis of the results of the investigation performed by the Applicant, it can be stated that until recently it has not been found possible to prepare polymers of carbon monoxide with one or more $C_{10+}$ $\alpha$-olefins having an $\overline{M}_W$ above $10^4$ in this manner and at an acceptable reaction rate.

Continued investigation by the Applicant on this subject, however, has disclosed that with the application of a catalyst composition containing a Group VIII metal and a phosphorus bidentate ligand having the general formula $(R^1R^2P)_2R$, polymers of carbon monoxide with one or more $C_{10+}$ $\alpha$-olefins can be prepared at an acceptable reaction rate, in which polymers on the one hand the units originating from carbon monoxide and on the other hand the units originating from the applied olefins occur in an alternating way and which polymers possess an $\overline{M}_W$ above $10^4$, by performing the polymerization in the presence of a diluent which consists for more than 90 %v of an aprotic liquid.

Polymers of carbon monoxide with one or more $C_{10+}$ $\alpha$-olefins in which polymers on the one hand the units originating from carbon monoxide and on the other hand the units originating from the olefins occur in an alternating way and which polymers possess an $\overline{M}_W$ of more than $10^4$ are novel per se.

As examples of the novel polymers which were prepared by the Applicant, mention may be made of carbon monoxide/n-tetradecene-1 copolymers, carbon monoxide/n-hexadecene-1 copolymers, carbon monoxide/n-octadecene-1 copolymers, carbon monoxide/n-tetradecene-1/n-octadecene-1 terpolymers, carbon monoxide/n-tetradecene-1/n-hexadecene-1/n-octadecene-1 quaterpolymers, carbon monoxide/n-dodecene-1/n-tetradecene-1/n-hexadecene-1/n-octadecene-1 polymers and polymers of carbon monoxide with a mixture of unbranched $\alpha$-olefins having 20-24 carbon atoms per molecule.

In the preparation of the novel polymers according to the invention, suitably use is made of a catalyst composition which contains a Group VIII metal and a phosphorus bidentate ligand having the general formula $(R^1R^2P)_2R$. In the

EP 0 468 594 B1

present patent application, Group VIII metals are understood as being the noble metals ruthenium, rhodium, palladium, osmium, iridium and platinum, and the iron group metals iron, cobalt and nickel. In the catalyst compositions, the Group VIII metal is preferentially chosen from palladium, nickel and cobalt. Special preference is given to palladium as Group VIII metal. Incorporation of the Group VIII metal in the catalyst compositions is preferably effected in the form of a carboxylate, particularly an acetate. In addition to a Group VIII metal and a phosphorus bidentate ligand, the catalyst compositions furthermore preferably contain an anion of an acid having a pKa below 6 and in particular an anion of an acid having having a pKa below 2. Examples of acids having a pKa below 2 are mineral acids such as perchloric acid, sulphonic acids such as para-toluene sulphonic acid, and halogen carboxylic acids such as trifluoro acetic acid. The anion can be introduced into the catalyst compositions either in the form of a compound from which the desired anion splits off, or in the form of a mixture of compounds from which the desired anion is formed by inter-reaction. As a rule, the anion is taken up in the catalyst compositions in the form of an acid. If desired, the anion can also be incorporated in the catalyst compositions in the form of a main group metal salt or a non-noble transition metal salt of the relevant acid. Nickel perchlorate is very suitable as salt of an acid having a pKa below 2. If the choice falls on an anion of a carboxylic acid, it may be incorporated in the catalyst compositions in the form of an acid or in the form of a derivative thereof such as an alkyl or aryl ester, an amide, an imide, an anhydride, an orthoester, a lactone, a lactam or an alkylidene dicarboxylate. The anion is preferably present in the catalyst compositions in a quantity of 1-100 and in particular 2-50 mol per gram atom of Group VIII metal. Besides resulting from use as a separate component, the anion of an acid having a pKa below 6 can also be present in the catalyst compositions as a result of the application of, for example, palladium trifluoro acetate or palladium para-tosylate as Group VIII metal compound.

Besides a Group VIII metal, a phosphorus bidentate ligand and optionally an anion of an acid having a pKa below 6, the catalyst compositions preferably contain an organic oxidant as well. Examples of suitable organic oxidants are 1,2- and 1,4-quinones, aliphatic nitrites such as butyl nitrite, and aromatic nitro-compounds such as nitrobenzene and 2,4-dinitrotoluene. Preference is given to 1,4-quinones such as 1,4-benzoquinone and 1,4-naphthoquinone. The quantity of organic oxidant used is preferably 5 to 5,000 and in particular 10 to 1,000 mol per gram atom of Group VIII metal.

The phosphorus bidentate ligand is preferably present in the catalyst compositions in a quantity of 0.5-2 and in particular of 0.75-1.5 mol per gram atom of Group VIII metal. In the phosphorus bidentate ligand having the general formula $(R^1R^2P)_2R$, the groups $R^1$ and $R^2$ preferably each contain not more than 10 and in particular not more than six carbon atoms. Furthermore preference is given to phosphorus bidentate ligands in which the groups $R^1$ and $R^2$ are identical alkyl groups. With regard to the bridging group R present in the phosphorus bidentate ligands, preference is given to bridging groups containing three atoms in the bridge of which at least two are carbon atoms. Examples of suitable bridging groups R are the $-CH_2-CH_2-CH_2$-group, the $-CH_2-C(CH_3)_2-CH_2$-group, the $-CH_2-Si(CH_3)_2-CH_2$-group and the $-CH_2-O-CH_2$-group. A very suitable phosphorus bidentate ligand for use in the present catalyst compositions is 1,3-bis(di-n-butyl phosphino)propane.

The quantity of catalyst composition used in the preparation of the polymer can vary between wide limits. For each mol of olefin to be polymerized it is preferred to use a quantity of catalyst composition which contains $10^{-7}$-$10^{-3}$ and in particular $10^{-6}$-$10^{-4}$ gram atom of Group VIII metal.

In the illustrated preparation of the polymers, the contacting of the monomers with the catalyst composition should take place in the presence of a diluent which consists for more than 90 %v of an aprotic liquid. Both polar and apolar liquids are eligible as aprotic liquids. As examples of polar aprotic liquids, mention may be made of aliphatic ketones such as acetone and methyl ethyl ketone, aliphatic carboxylic acid esters such as methyl acetate, ethyl acetate and methyl propionate, cyclic ethers such as tetrahydrofuran and dioxane, alkyl ethers of glycols such as the dimethyl ether of di-ethylene glycol, lactones such as $\gamma$-butyrolactone, lactams such as N-methylpyrrolidone and cyclic sulphones such as sulpholane. As examples of apolar liquids, mention may be made of hydrocarbons such as n-hexane, n-heptane, cyclohexane and toluene. The diluent in which the polymerization is performed preferably contains a small quantity of a protic liquid. Lower aliphatic alcohols and in particular methanol are very suitable for this purpose. Very favourable results were obtained by performing the polymerization in a mixture of tetrahydrofuran and methanol. If desired, the $C_{10+}$ $\alpha$-olefin used as monomer can also fulfil the function of aprotic liquid, so that the polymerization can be performed in the absence of an additional aprotic liquid such as tetrahydrofuran. An example of such a polymerization is the preparation of a carbon monoxide/n-hexadecene-1 copolymer which was performed by contacting carbon monoxide and n-hexadecene-1 with a methanolic solution of the catalyst composition.

The polymerization is preferably performed at a temperature of 25-150°C and a pressure of 2-150 bar and in particular at a temperature of 30-130°C and a pressure of 5-100 bar. The molar ratio of the olefins to carbon monoxide is preferably between 10:1 and 1:10 and in particular between 5:1 and 1:5.

The invention will now be elucidated with reference to the following examples.

In the examples, the abreviations used have the following meanings.

CO      carbon monoxide

$C_{12}^=$     n-dodecene-1

$C_{14}^=$     n-tetradecene-1

$C_{16}^=$     n-hexadecene-1

$C_{18}^=$     n-octadecene-1

$C_{20}^= - C_{24}^=$   mixture of linear $\alpha$-olefins having 20-24 carbon atoms per molecule

## Example 1

A $CO/C_{14}^=$ copolymer was prepared as follows. In a stirred autoclave with a capacity of 250 ml which contained 100 ml of tetrahydrofuran and 40 ml of $C_{14}^=$ in a nitrogen atmosphere, a catalyst solution was placed which contained:

5 ml methanol,
0.1 mmol palladium acetate,
0.5 mmol nickel perchlorate,
0.12 mmol 1,3-bis(di-n-butylphosphino)propane, and
6 mmol naphthoquinone.

After injecting CO to a pressure of 40 bar, the contents of the autoclave were heated to 35°C. After 20 hours, the polymerization was terminated by cooling the reaction mixture to ambient temperature and depressuring. After the addition of acetone to the reaction mixture, the polymer was filtered off, washed with acetone and dried. The yield was 40 g of $CO/C_{14}^=$ copolymer having an $\overline{M}_W$ of 103,000.

## Example 2

A $CO/C_{16}^=$ copolymer was prepared in substantially the same manner as the $CO/C_{14}^=$ copolymer in Example 1, but with the following differences:

a) the autoclave contained 40 ml of $C_{16}^=$ instead of $C_{14}^=$, and
b) the reaction temperature was 50°C instead of 35°C. The yield was 35 g of $CO/C_{16}^=$ copolymer having an $\overline{M}_W$ of 20,000.

## Example 3

A $CO/C_{18}^=$ copolymer was prepared in substantially the same manner as the $CO/C_{14}^=$ copolymer in Example 1, but with the following differences:

a) the autoclave contained 40 ml of $C_{18}^=$ instead of $C_{14}^=$,
b) the reaction temperature was 50°C instead of 35°C, and
c) the reaction time was 30 hours instead of 20 hours. The yield was 40 g of $CO/C_{18}^=$ copolymer having an $\overline{M}_W$ of 20,300.

## Example 4

A $CO/C_{14}^=/C_{18}^=$ terpolymer was prepared in substantially the same manner as the $CO/C_{14}^=$ copolymer in Example 1, but with the difference that the autoclave contained 30 ml of $C_{14}^=$ instead of 40 ml, and contained additionally 30 ml

of $C_{18}^=$.

The yield was 41 g of CO/$C_{14}^=$/$C_{18}^=$ terpolymer having an $\overline{M}_W$ of 78,000.

## Example 5

A CO/$C_{14}^=$/$C_{16}^=$/$C_{18}^=$ quaterpolymer was prepared in substantially the same manner as the CO/$C_{14}^=$ copolymer in Example 1, but with the following differences:

a) the autoclave contained 40 ml of a $C_{14}^=$/$C_{16}^=$/$C_{18}^=$ mixture in a molar ratio of 1:2:1 instead of neat $C_{14}^=$

b) CO was injected into the autoclave to a pressure of 70 bar instead of 40 bar,

c) the reaction temperature was 50°C instead of 35°C, and)

d) the reaction time was 15 hours instead of 20 hours. The yield was 42 g of CO/$C_{14}^=$/$C_{16}^=$/$C_{18}^=$ tetrapolymer having an $\overline{M}_W$ of 22,150.

## Example 6

A CO/$C_{20}^=$ - $C_{24}^=$ polymer was prepared in substantially the same manner as the CO/$C_{14}^=$ copolymer in Example 1, but with the following differences:

a) the autoclave contained 40 g of $C_{20}^=$ - $C_{24}^=$ instead of $C_{14}^=$;

b) CO was injected into the autoclave to a pressure of 70 bar instead of 40 bar,

c) the reaction temperature was 50°C instead of 35°C, and

d) the reaction time was 15 hours instead of 20 hours. The yield was 38 g of CO/$C_{20}^=$ - $C_{24}^=$ polymer with an $\overline{M}_W$ of 22,700.

## Example 7

A CO/$C_{12}^=$/$C_{14}^=$/$C_{16}^=$/$C_{18}^=$ polymer was prepared in substantially the same manner as the CO/$C_{14}^=$ copolymer in Example 1, but with the following differences:

a) the autoclave contained 50 ml of a $C_{12}^=$/$C_{14}^=$/$C_{16}^=$/$C_{18}^=$ mixture in a molar ratio of 1:2:2:1 instead of $C_{14}^=$ alone,

b) the reaction temperature was 50°C instead of 35°C, and

c) the reaction time was 15 hours instead of 20 hours. The yield was 40 g of CO/$C_{12}^=$/$C_{14}^=$/$C_{16}^=$/$C_{18}^=$ polymer having an $\overline{M}_W$ of 28,600.

## Example 8

A CO/$C_{12}^=$/$C_{14}^=$/$C_{16}^=$/$C_{18}^=$ polymer was prepared in substantially the same manner as the CO/$C_{14}^=$ copolymer in Example 1, but with the following differences:

a) the autoclave contained 50 ml of a $C_{12}^=$/$C_{14}^=$/$C_{16}^=$/$C_{18}^=$ mixture in a molar ratio of 2:1:1:2 instead of $C_{14}^=$ alone,

b) the reaction temperature was 50°C instead of 35°C, and

c) the reaction time was 15 hours instead of 20 hours. The yield was 42 g of CO/$C_{12}^=$/$C_{14}^=$/$C_{16}^=$/$C_{18}^=$ polymer having an $\overline{M}_W$ of 26,100.

Example 9

A $CO/C_{16}^=$ copolymer was prepared in substantially the same manner as the $CO/C_{14}^=$ copolymer in Example 1, but with the following differences:

a) the autoclave contained 100 ml of $C_{16}^=$ instead of tetrahydrofuran and $C_{14}^=$,

b) CO was injected into the autoclave to a pressure of 70 bar instead of 40 bar,

c) the reaction temperature was 50°C instead of 35°C, and

d) the reaction time was 15 hours instead of 20 hours. The yield was 45 g of $CO/C_{16}^=$ copolymer having an $\overline{M}_W$ of 35,400.

Example 10

The following polymers and polymer mixtures were tested as additives in three gas oils (A, B and C) in order to lower the PP, the CP and/or the CFPP of these oils.

Additive 1:     $CO/C_{14}^=$ copolymer prepared according to Example 1

Additive 2:     $CO/C_{16}^=$ copolymer prepared according to Example 2

Additive 3:     $CO/C_{14}^=/_{18}^=$ terpolymer prepared according to Example 4

Additive 4:     mixture of $CO/C_{14}^=$ copolymer prepared according to Example 1 and $CO/C_{16}^=$ copolymer prepared according to Example 2, in a weight ratio of 1:1

Additive 5:     mixture of $CO/C_{14}^=$ copolymer prepared according to Example 1 and $CO/C_{16}^=$ copolymer prepared according to Example 2, in a weight ratio of 1:3

For the sake of comparison, in addition the following four additives, which are commercially available for the present purpose, were tested.

Additive 6: PARAMIN ECA 5920 (PARAMIN is a trademark)
Additive 7: PARAMIN ECA 8182
Additive 8: PARAMIN ECA 8400
Additive 9: PARAFLOW 214 (PARAFLOW is a trademark)

The additives were introduced into the gas oils in the form of a 50 %w solution in an organic solvent. The result of the experiments is embodied in Tables 1-3, where for each of the gas oils the PP, CP and/or CFPP is reported after addition of the indicated quantity of polymer solution (containing 50 %w of active material) stated as mg of polymer solution per kg of gas oil.

Table 1

| GAS OIL A | | | | |
|---|---|---|---|---|
| Added quantity of polymer solution, mg/kg | Polymer No. | Cloud point according to ASTM D2500 °C | Pour point according to ASTM D97 °C | Cold filter plugging point according to IP 309 °C |
| Gas oil A as such | | 2 | -12 | -9 |
| 100 | 6 | | | -15 |
| 200 | 6 | | | -16 |
| 300 | 6 | | | -16 |
| 400 | 6 | | | -18 |
| 600 | 6 | 0 | | |
| 1000 | 6 | -1 | | |
| 100 | 2 | | -18 | -19 |
| 200 | 2 | | -24 | |
| 600 | 2 | -0.5 | -24 | |
| 1000 | 2 | -1.5 | | |
| 40 | 3 | | | -19 |
| 400 | 3 | | | -24 |
| 100 | 4 | | | -17 |
| 150 | 4 | | | -20 |
| 300 | 4 | | | -22 |
| 2000 | 5 | | -42 | |
| 2000 | 6 | | -39 | |
| 100 | 7 | 2 | -12 | |
| 200 | 7 | 2 | -15 | |
| 600 | 7 | 2 | -18 | |
| 1000 | 7 | 1 | -24 | |

## Table 1 (Cont'd)

| GAS OIL A | | | | |
| --- | --- | --- | --- | --- |
| Added quantity of polymer solution, mg/kg | Polymer No. | Cloud point according to ASTM D2500 °C | Pour point according to ASTM D97 °C | Cold filter plugging point according to IP 309 °C |
| 100 | 8 | 1.5 | | |
| 200 | 8 | 1.5 | | |
| 600 | 8 | 1 | | |
| 1000 | 8 | 0.5 | | |
| 100 | 9 | | -12 | -13 |
| 200 | 9 | | -15 | -18 |

Table 2

| GAS OIL B | | | | |
| --- | --- | --- | --- | --- |
| Added quantity of polymer solution, mg/kg | Polymer No. | Cloud point according to ASTM D2500 °C | Pour point according to ASTM D97 °C | Cold filter plugging point according to IP 309 °C |
| Gas oil B as such | | 1 | -15 | -9 |
| 100 | 6 | | -21 | -17 |
| 400 | 6 | | -21 | |
| 600 | 6 | | -30 | -18 |
| 4000 | 6 | | -30 | -6 |
| 100 | 2 | | -24 | -17 |
| 400 | 2 | | -30 | |
| 4000 | 2 | | -36 | |
| 100 | 4 | | -24 | |
| 4000 | 4 | | -51 | -13 |
| 200 | 3 | | | -20 |
| 400 | 3 | | | -22 |

Table 3

| GAS OIL C | | | | |
|---|---|---|---|---|
| Added quantity of polymer solution, mg/kg | Polymer No. | Cloud point according to ASTM D2500 °C | Pour point according to ASTM D97 °C | Cold filter plugging point according to IP 309 °C |
| Gas oil C as such | | 0 | -18 | -5 |
| 75 | 6 | | | -5 |
| 300 | 6 | | | -6 |
| 150 | 2 | | | -11 |
| 150 | 1 | | | -15 |
| 300 | 1 | | | -17 |
| 150 | 4 | | | -18 |
| 75 | 3 | | | -13 |
| 600 | 3 | | -27 | |

The results reported in Tables 1 to 3 clearly demonstrate the superiority of the polymers according to the invention in terms of their capability for PP, CP and/or CFPP reduction of paraffinic hydrocarbon oils in comparison to commercially available additives for this purpose.

The $\overline{M}_W$ of the new polymers prepared according to Examples 1-9 was determined by means of GPC analysis. Using $^{13}$C-NMR analysis, it was found that these polymers were built of linear chains in which on the one hand the units originating from carbon monoxide and on the other hand the units originating from the $C_{10+}$ $\alpha$-olefins occurred in an alternating way. In the polymers which were prepared from monomer mixtures containing two or more $C_{10+}$ $\alpha$-olefins, the units originating from the various $C_{10+}$ $\alpha$-olefins occurred in random sequence relative to one another.

## Claims

**Claims for the following Contracting States : BE, DE, FR, GB, IT, NL**

1. Hydrocarbon oil compositions comprising a hydrocarbon oil and a polymeric additive characterized in that they comprise a paraffinic hydrocarbon oil and as additive linear polymers of carbon monoxide with one or more $\alpha$-olefins having at least 10 carbon atoms per molecule ($C_{10+}$ $\alpha$-olefins) and optionally moreover with one or more olefins having fewer than 10 carbon atoms per molecule ($C_{9-}$ olefins), in which polymers the units originating from carbon monoxide and the units originating from the olefins occur in an alternating way.

2. Hydrocarbon oil compositions as claimed in claim 1, characterized in that the polymers possess a weight average molecular weight ($\overline{M}_W$), between $10^3$ and $10^6$.

3. Hydrocarbon oil compositions as claimed in claim 1 or 2, characterized in that the $C_{10+}$ $\alpha$-olefins used as monomers in the preparation of the polymers contain fewer than 40 carbon atoms per molecule.

4. Hydrocarbon oil compositions as claimed in any one or more of claims 1-3, characterized in that they contain as additive polymers selected from carbon monoxide/n-tetradecene-1 copolymers, carbon monoxide/n-hexadecene-1 copolymers, carbon monoxide/n-tetradecene-1/n-octadecene-1 terpolymers and mixtures of carbon monoxide/n-tetradecene-1 copolymers with carbon monoxide/n-hexadecene-1 copolymers.

5. Hydrocarbon oil compositions as claimed in any one or more of claims 1-4, characterized in that they contain 1-10,000 mg of polymer per kg of hydrocarbon oil.

6. Polymers of carbon monoxide with one or more $\alpha$-olefins, characterized in that they consist of linear chains in which on the one hand units originating from carbon monoxide and on the other hand units originating from one or more

$\alpha$-olefins having at least 10 carbon atoms per molecule ($C_{10+}$ $\alpha$-olefins) occur in an alternating and that they possess a weight average molecular weight ($\overline{M}_W$), of more than $10^4$, on the understanding that the $\alpha$-olefin is not exclusively an $\alpha$-olefin having 10 carbon atoms or exclusively an $\alpha$-olefin having 20 carbon atoms or exclusively 1-dodecene.

7. Polymers as claimed in claim 6, characterized in that they belong to the group formed by carbon monoxide/n-tetradecene-1 copolymers, carbon monoxide/n-hexadecene-1 copolymers, carbon monoxide/n-octadecene-1 copolymers, carbon monoxide/n-tetradecene-1/n-octadecene-1 terpolymers, carbon monoxide/n-tetradecene-1/n-hexadecene-1/n-octadecene-1 quaterpolymers, carbon monoxide/n-dodecene-1/n-tetradecene-1/n-hexadecene-1/n-octadecene-1 pentapolymers and polymers of carbon monoxide with a mixture of unbranched $\alpha$-olefins having 20 to 24 carbon atoms per molecule.

8. A process for the preparation of polymers of carbon monoxide with one or more $\alpha$-olefins which polymers consist of linear chains in which on the one hand units originating from carbon monoxide and on the other hand units originating from one or more $\alpha$-olefins having at least 10 carbon atoms per molecule ($C_{10+}$ $\alpha$-olefins) occur in an alternating way and which polymers possess a weight average molecular weight ($\overline{M}_W$), of more than $10^4$, which process comprises contacting the monomers, at elevated temperature and pressure and in the presence of a diluent consisting for more than 90 %v of an aprotic liquid, with a catalyst composition containing a Group VIII metal, in particular palladium, and a phosphorus bidentate ligand having the general formula $(R^1R^2P)_2R$ where $R^1$ and $R^2$ represent identical or different optionally polar substituted aliphatic hydrocarbyl groups and R a bivalent organic bridging group containing at least two carbon atoms in the bridge linking the two phosphorus atoms.

9. A process as claimed in claim 8, characterized in that it is performed at a temperature of 25-150°C, a pressure of 2-150 bar and a molar ratio of the olefins relative to carbon monoxide between 10:1 and 1:10, and that per mol of olefin to be polymerized a quantity of catalyst composition is used which contains between $10^{-7}$ and $10^{-3}$ gram atom of Group VIII metal.

10. A process as claimed claim 8 or 9, characterized in that the $C_{10+}$ $\alpha$-olefin used as monomer also performs the function of aprotic liquid.

11. Polymers of carbon monoxide and one or more $\alpha$-olefins, characterized in that they are obtainable by a process as claimed in any one or more of claims 8-10.

**Claims for the following Contracting State : ES**

1. A process for preparing hydrocarbon oil compositions comprising admixing a hydrocarbon oil and a polymeric additive characterized in that it comprises admixing a paraffinic hydrocarbon oil and as additive linear polymers of carbon monoxide with one or more $\alpha$-olefins having at least 10 carbon atoms per molecule ($C_{10+}$ $\alpha$-olefins) and optionally moreover with one or more olefins having fewer than 10 carbon atoms per molecule ($C_{9-}$ olefins), in which polymers the units originating from carbon monoxide and the units originating from the olefins occur in an alternating way.

2. A process as claimed in claim 1, characterized in that the polymers possess a weight average molecular weight ($\overline{M}_W$), between $10^3$ and $10^6$.

3. A process as claimed in claim 1 or 2, characterized in that the $C_{10+}$ $\alpha$-olefins used as monomers in the preparation of the polymers contain fewer than 40 carbon atoms per molecule.

4. A process as claimed in any one or more of claims 1-3, characterized in that the polymers admixed as additive are selected from carbon monoxide/n-tetradecene-1 copolymers, carbon monoxide/n-hexadecene-1 copolymers, carbon monoxide/n-tetradecene-1/n-octadecene-1 terpolymers and mixtures of carbon monoxide/n-tetradecene-1 copolymers with carbon monoxide/n-hexadecene-1 copolymers.

5. A process as claimed in any one or more of claims 1-4, characterized in that a quantity of 1-10,000 mg of polymer is admixed per kg of hydrocarbon oil.

6. A process for the preparation of polymers of carbon monoxide with one or more $\alpha$-olefins which polymers consist of linear chains in which on the one hand units originating from carbon monoxide and on the other hand units originating from one or more $\alpha$-olefins having at least 10 carbon atoms per molecule ($C_{10+}$ $\alpha$-olefins) occur in an alternating way and which polymers possess a weight average molecular weight $(\overline{M}_w)$, of more than $10^4$, which process comprises contacting the monomers, at elevated temperature and pressure and in the presence of a diluent consisting for more than 90 %v of an aprotic liquid, with a catalyst composition containing a Group VIII metal, in particular palladium, and a phosphorus bidentate ligand having the general formula $(R^1R^2P)_2R$ where $R^1$ and $R^2$ represent identical or different optionally polar substituted aliphatic hydrocarbyl groups and R a bivalent organic bridging group containing at least two carbon atoms in the bridge linking the two phosphorus atoms.

7. A process as claimed in claim 6, characterized in that it is performed at a temperature of 25-150 °C, a pressure of 2-150 bar and a molar ratio of the olefins relative to carbon monoxide between 10:1 and 1:10, and that per mol of olefin to be polymerized a quantity of catalyst composition is used which contains between $10^{-7}$ and $10^{-3}$ gram atom of Group VIII metal.

8. A process as claimed in claim 6 or 7, characterized in that the $C_{10+}$ $\alpha$-olefin used as monomer also performs the function of aprotic liquid.

## Patentansprüche

**Patentansprüche für folgende Vertragsstaaten : BE, DE, FR, GB, IT, NL**

1. Kohlenwasserstoffölzusammensetzungen aus einem Kohlenwasserstofföl und einem polymeren Additiv, dadurch gekennzeichnet, daß sie ein paraffinhaltiges Kohlenwasserstofföl und als Additiv lineare Polymerisate aus Kohlenmonoxid und einem oder mehreren $\alpha$-Olefinen mit mindestens 10 Kohlenstoffatomen pro Molekül ($C_{10+}$-$\alpha$-Olefine) und gegebenenfalls außerdem einem oder mehreren Olefinen mit weniger als 10 Kohlenstoffatomen pro Molekül ($C_{9-}$-Olefine), wobei bei diesen Polymerisaten die vom Kohlenmonoxid stammenden Einheiten und die von den Olefinen stammenden Einheiten alternieren, enthalten.

2. Kohlenwasserstoffölzusammensetzungen nach Anspruch 1, dadurch gekennzeichnet, daß die Polymerisate ein gewichtsmittleres Molekulargewicht ($\overline{M}_w$) von $10^3$ bis $10^6$ besitzen.

3. Kohlenwasserstoffölzusammensetzungen nach Anspruch 1 oder 2, dadurch gekennzeichnet, daß die bei der Herstellung der Polymerisate als Monomere verwendeten $C_{10+}$-$\alpha$-Olefine weniger als 40 Kohlenstoffatome pro Molekül enthalten.

4. Kohlenwasserstoffölzusammensetzungen nach einem oder mehreren der Ansprüche 1-3, dadurch gekennzeichnet, daß sie als Additiv aus Kohlenmonoxid/n-Tetradecen-1-copolymerisaten, Kohlenmonoxid/n-Hexadecen-1-copolymerisaten, Kohlenmonoxid/n-Tetradecen-1/n-Octadecen-1-terpolymerisaten und Mischungen aus Kohlenmonoxid/n-Tetradecen-1-copolymerisaten und Kohlenmonoxid/n-Hexadecen-1-copolymerisaten ausgewählte Polymerisate enthalten.

5. Kohlenwasserstoffölzusammensetzungen nach einem oder mehreren der Ansprüche 1-4, dadurch gekennzeichnet, daß sie 1-10,000 mg Polymerisat pro kg Kohlenwasserstofföl enthalten.

6. Polymere aus Kohlenmonoxid mit einem oder mehreren $\alpha$-Olefinen, dadurch gekennzeichnet, daß sie aus linearen Ketten bestehen, in denen die von Kohlenmonoxid stammenden Einheiten einerseits und die von einem oder mehreren $\alpha$-Olefinen mit mindestens 10 Kohlenstoffatomen pro Molekül ($C_{10+}$-$\alpha$-Olefine) stammenden Einheiten andererseits alternieren und daß sie ein gewichtsmittleres Molekulargewicht ($\overline{M}_w$) von mehr als $10^4$ besitzen, unter der Voraussetzung, daß das $\alpha$-Olefin nicht ausschließlich ein $\alpha$-Olefin mit 10 Kohlenstoffatomen oder ausschließlich ein $\alpha$-Olefin mit 20 Kohlenstoffatomen oder ausschließlich 1-Dodecen ist.

7. Polymerisate nach Anspruch 6, dadurch gekennzeichnet, daß sie zu der aus Kohlenmonoxid/n-Tetradecen-1-copolymerisaten, Kohlenmonoxid/n-Hexadecen-1-copolymerisaten, Kohlenmonoxid/n-Octadecen-1-copolymerisaten, Kohlenmonoxid/n-Tetradecen-1/n-Octadecen-1-terpolymerisaten, Kohlenmonoxid/n-Tetradecen-1/n-Hexadecen-1/n-Octadecen-1-quaterpolymeren, Kohlenmonoxid/n-Dodecen- 1/n-Tetradecen-1/n-Hexadecen-1/n-Octadecen-1-pentapolymerisaten und Polymerisaten aus Kohlenmonoxid mit einer Mischung unverzweigter $\alpha$-Olefine mit 20 bis 24 Kohlenstoffatomen pro Molekül gebildeten Gruppe gehören.

**8.** Verfahren zur Herstellung von Polymerisaten aus Kohlenmonoxid und einem oder mehreren $\alpha$-Olefinen, die aus linearen Ketten bestehen, in denen die von Kohlenmonoxid stammenden Einheiten einerseits und die von einem oder mehreren $\alpha$-Olefinen mit mindestens 10 Kohlenstoffatomen pro Molekül ($C_{10+}$-$\alpha$-Olefine) stammenden Einheiten andererseits alternieren, und die ein gewichtsmittleres Molekulargewicht ($\overline{M}_w$) von mehr als $10^4$ besitzen, wobei man bei diesem Verfahren die Monomere bei erhöhter Temperatur und erhöhtem Druck und in Gegenwart eines zu mehr als 90 Vol.-% aus einer aprotischen Flüssigkeit bestehenden Verdünnungsmittels mit einer Katalysatorzusammensetzung in Berührung bringt, die ein Metall der Gruppe VIII, insbesondere Palladium, und einen zweizähnigen Phosphorliganden der allgemeinen Formel ($R^1R^2P)_2R$ enthält, wobei $R^1$ und $R^2$ gleiche oder verschiedene, gegebenenfalls polare substituierte aliphatische Kohlenwasserstoffgruppen bedeuten und R eine zweiwertige organische Brückengruppe bedeutet, die mindestens zwei Kohlenstoffatome in der die beiden Phosphoratome verbindenden Brücke enthält.

**9.** Verfahren nach Anspruch 8, dadurch gekennzeichnet, daß man es bei einer Temperatur von 25-150°C, einem Druck von 2-150 bar und einem Molverhältnis der Olefine zu Kohlenmonoxid von 10:1 bis 1:10 durchführt, und daß man pro Mol zu polymerisierendem Olefin eine Menge an Katalysatorzusammensetzung verwendet, die $10^{-7}$ bis $10^{-3}$ Grammatom Metall der Gruppe VIII enthält.

**10.** Verfahren nach Anspruch 8 oder 9, dadurch gekennzeichnet, daß das als Monomer verwendete $C_{10+}$-$\alpha$-Olefin gleichzeitig die Funktion einer aprotischen Flüssigkeit erfüllt.

**11.** Polymerisate aus Kohlenmonoxid und einem oder mehreren $\alpha$-Olefinen, dadurch gekennzeichnet, daß sie durch ein Verfahren nach einem oder mehreren der Ansprüche 8-10 erhältlich sind.

**Patentansprüche für folgenden Vertragsstaat : ES**

**1.** Verfahren zur Herstellung von Kohlenwasserstoffölzusammensetzungen, bei dem man ein Kohlenwasserstofföl und ein polymeres Additiv mischt, dadurch gekennzeichnet, daß man ein paraffinhaltiges Kohlenwasserstofföl und als Additiv lineare Polymerisate aus Kohlenmonoxid und einem oder mehreren $\alpha$-Olefinen mindestens 10 Kohlenstoffatomen pro Molekül ($C_{10+}$-$\alpha$-Olefine) und gegebenenfalls außerdem mit einem oder mehreren Olefinen mit weniger als 10 Kohlenstoffatomen pro Molekül ($C_{9-}$-Olefine), wobei in diesen Polymerisaten die von Kohlenmonoxid stammenden Einheiten und die von den Olefinen stammenden Einheiten alternieren, mischt.

**2.** Verfahren nach Anspruch 1, dadurch gekennzeichnet, daß die Polymerisate ein gewichtsmittleres Molekulargewicht ($\overline{M}_w$) von $10^3$ bis $10^6$ besitzen.

**3.** Verfahren nach Anspruch 1 oder 2, dadurch gekennzeichnet, daß die bei der Herstellung der Polymerisate als Monomere verwendeten $C_{10+}$-$\alpha$-Olefine weniger als 40 Kohlenstoffatome pro Molekül enthalten.

**4.** Verfahren nach einem oder mehreren der Ansprüche 1-3, dadurch gekennzeichnet, daß die als Additiv zugemischten Polymerisate aus Kohlenmonoxid/ n-Tetradecen-1-copolymerisaten, Kohlenmonoxid/n-Hexadecen-1-copolymerisaten, Kohlenmonoxid/n-Tetradecen-1/ n-Octadecen-1-terpolymerisaten und Mischungen aus Kohlenmonoxid/n-Tetradecen-1-copolymerisaten und Kohlenmonoxid/n-Hexadecen-1-copolymerisaten ausgewählt sind.

**5.** Verfahren nach einem oder mehreren der Ansprüche 1-4, dadurch gekennzeichnet, daß pro kg Kohlenwasserstofföl eine Menge von 1-10,000 mg Polymerisat zugemischt wird.

**6.** Verfahren zur Herstellung von Polymerisaten aus Kohlenmonoxid mit einem oder mehreren $\alpha$-Olefinen, die aus linearen Ketten bestehen, in denen die von Kohlenmonoxid stammenden Einheiten einerseits und die von einem oder mehreren $\alpha$-Olefinen mit mindestens 10 Kohlenstoffatomen pro Molekül ($C_{10+}$-$\alpha$-Olefine) stammenden Einheiten andererseits alternieren, und die ein gewichtsmittleres Molekulargewicht ($\overline{M}_w$) von mehr als $10^4$ besitzen, wobei man bei diesem Verfahren die Monomere bei erhöhter Temperatur und erhöhtem Druck und in Gegenwart eines zu mehr als 90 Vol.-% aus einer aprotischen Flüssigkeit bestehenden Verdünnungsmittels mit einer Katalysatorzusammensetzung in Berührung bringt, die ein Metall der Gruppe VIII, insbesondere Palladium, und einen zweizähnigen Phosphorliganden der allgemeinen Formel ($R^1R^2P)_2R$ enthält, wobei $R^1$ und $R^2$ gleiche oder verschiedene, gegebenenfalls polare substituierte aliphatische Kohlenwasserstoffgruppen bedeuten und R eine zweiwertige organische Brückengruppe bedeutet, die mindestens zwei Kohlenstoffatome in der die beiden Phosphoratome verbindenden Brücke enthält.

**7.** Verfahren nach Anspruch 6, dadurch gekennzeichnet, daß man es bei einer Temperatur von 25-150°C, einem Druck von 2-150 bar und einem Molverhältnis der Olefine zu Kohlenmonoxid von 10:1 bis 1:10 durchführt, und daß man pro Mol zu polymerisierendem Olefin eine Menge an Katalysatorzusammensetzung verwendet, die $10^{-7}$ bis $10^{-3}$ Grammatom Metall der Gruppe VIII enthält.

**8.** Verfahren nach Anspruch 6 oder 7, dadurch gekennzeichnet, daß das als Monomer verwendete $C_{10+}$-$\alpha$-Olefin gleichzeitig die Funktion einer aprotischen Flüssigkeit erfüllt.

**Revendications**

**Revendications pour les Etats contractants suivants : BE, DE, FR, GB, IT, NL**

**1.** Compositions d'huiles hydrocarbonées, qui comprennent une huile hydrocarbonée et un additif polymérique, caractérisées en ce qu'elles comprennent une huile hydrocarbonée paraffinique et, à titre d'additif, des polymères linéaires du monoxyde de carbone avec une ou plusieurs $\alpha$-oléfines comportant au moins 10 atomes de carbone par molécule ($\alpha$-oléfines en $C_{10+}$) et en outre éventuellement avec une ou plusieurs oléfines comportant moins de 10 atomes de carbone par molécule (oléfines en $C_{9-}$), polymères dans lesquels les unités qui tirent leur origine du monoxyde de carbone et les unités qui tirent leur origine des oléfines se présentent d'une manière alternante.

**2.** Compositions d'huiles hydrocarbonées suivant la revendication 1, caractérisées en ce que les polymères possèdent un poids moléculaire moyen en poids ($\overline{M}_p$) compris entre $10^3$ et $10^6$.

**3.** Compositions d'huiles hydrocarbonées suivant la revendication 1 ou 2, caractérisées en ce que les $\alpha$-oléfines en $C_{10+}$, employées à titre de monomères pour la préparation des polymères, contiennent moins de 40 atomes de carbone par molécule.

**4.** Compositions d'huiles hydrocarbonées suivant l'une quelconque ou plusieurs des revendications 1 à 3, caractérisées en ce qu'elles contiennent, à titre d'additif, des polymères choisis parmi les copolymères du monoxyde de carbone et du n-tétradécène-1, les copolymères du monoxyde de carbone et du n-hexadécène-1, les terpolymères du monoxyde de carbone, du n-tétradécène-1 et du n-octadécène-1 et les mélanges de copolymères du monoxyde de carbone et du n-tétradécène-1 et de copolymères du monoxyde de carbone et du n-hexadécène-1.

**5.** Compositions d'huiles hydrocarbonées suivant l'une quelconque ou plusieurs des revendications 1 à 4, caractérisées en ce qu'elles contiennent de 1 à 10.000 mg de polymère par kg d'huile hydrocarbonée.

**6.** Polymères du monoxyde de carbone avec une ou plusieurs $\alpha$-oléfines, caractérisés en ce qu'ils sont constitués de chaînes linéaires dans lesquelles, d'une part, les unités qui tirent leur origine du monoxyde de carbone et, d'autre part, les unités qui tirent leur origine d'une ou plusieurs $\alpha$-oléfines possédant au moins 10 atomes de carbone par molécule ($\alpha$-oléfines en $C_{10+}$) se présentent d'une manière alternante et en ce qu'ils possèdent un poids moléculaire moyen en poids ($\overline{M}_p$) supérieur à $10^4$, avec l'entendement que l'$\alpha$-oléfine n'est pas exclusivement une $\alpha$-oléfine possédant 10 atomes de carbone ou exclusivement une $\alpha$-oléfine possédant 20 atomes de carbone, ou exclusivement le 1-dodécène.

**7.** Polymères suivant la revendication 6, caractérisés en ce qu'ils appartiennent au groupe formé par des copolymères du monoxyde de carbone et du n-tétradécène-1, des copolymères du monoxyde de carbone et du n-hexadécène-1, des copolymères du monoxyde de carbone et du n-octadécène-1, des terpolymères du monoxyde de carbone, du n-tétradécène-1 et du n-octadécène-1, des quaterpolymères du monoxyde de carbone, du n-tétradécène-1, du n-hexadécène-1 et du n-octadécène-1, des pentapolymères du monoxyde de carbone, du n-dodécène-1, du n-tétradécène-1, du n-hexadécène-1 et du n-octadécène-1 et des polymères du monoxyde de carbone avec un mélange d'$\alpha$-oléfines non ramifiées comportant de 20 à 24 atomes de carbone par molécule.

**8.** Procédé de préparation des polymères du monoxyde de carbone avec une ou plusieurs $\alpha$-oléfines, lesquels polymères sont constitués de chaînes linéaires dans lesquelles, d'une part, les unités qui tirent leur origine du monoxyde de carbone et, d'autre part, les unités qui tirent leur origine d'une ou plusieurs $\alpha$-oléfines comportant au moins 10 atomes de carbone par molécule ($\alpha$-oléfines en $C_{10+}$) se présentent d'une manière alternante et lesquels polymères possèdent un poids moléculaire moyen en poids ($\overline{M}_p$) supérieur à $10^4$, lequel procédé comprend la mise en contact des monomères, à température et pression élevées et en présence d'un diluant constitué pour plus de 90% en volume d'un liquide aprotique, avec une composition catalytique contenant un métal du groupe VIII, en particulier le palladium et un ligand bidenté du phosphore répondant à la formule générale $(R^1R^2P)_2R$ dans laquelle $R^1$ et $R^2$ représentent des radicaux hydrocarbyle aliphatiques à substitution polaire éventuelle, identiques ou différents et R représente un groupe de pontage organique bivalent contenant au moins deux atomes de carbone dans le pont liant les deux atomes de phosphore.

9. Procédé suivant la revendication 8 caractérisé en ce qu'on l'entreprend à une température de 25 à 150°C, une pression de 2 à 150 bars et un rapport molaire des oléfines par rapport au monoxyde de carbone compris entre 10:1 et 1:10 et en ce que, par mole d'oléfine à polymériser, on utilise une proportion de composition catalytique qui contient entre $10^{-7}$ et $10^{-3}$ atome-gramme de métal du groupe VIII.

10. Procédé suivant la revendication 8 ou 9, caractérisé en ce que l'$\alpha$-oléfine en $C_{10+}$ utilisée à titre de monomère joue également le rôle de liquide aprotique.

11. Polymères du monoxyde de carbone et d'une ou plusieurs $\alpha$-oléfines, caractérisés en ce qu'on peut les obtenir par la mise en oeuvre du procédé suivant l'une quelconque des revendications 8 à 10.

**Revendications pour l'Etat contractant suivant : ES**

1. Procédé de préparation de compositions d'huiles hydrocarbonées, comprenant le mélange d'une huile hydrocarbonée et d'un additif polymérique, caractérisé en ce qu'il comprend le mélange d'une huile hydrocarbonée paraffinique et, à titre d'additif, des polymères linéaires du monoxyde de carbone avec une ou plusieurs $\alpha$-oléfines comportant au moins 10 atomes de carbone par molécule ($\alpha$-oléfines en $C_{10+}$) et éventuellement de surcroît avec une ou plusieurs oléfines comportant moins de 10 atomes de carbone par molécule (oléfines en $C_{9-}$), dans lesquels polymères, les unités qui tirent leur origine du monoxyde de carbone et les unités qui tirent leur origine des oléfines sont présentes de manière alternante.

2. Procédé suivant la revendication 1, caractérisé en ce que les polymères possèdent un poids moléculaire moyen en poids ($\overline{M}_p$) compris entre $10^3$ et $10^6$.

3. Procédé suivant la revendication 1 ou 2, caractérisé en ce que les $\alpha$-oléfines en $C_{10+}$, employées à titre de monomères pour la préparation des polymères, contiennent moins de 40 atomes de carbone par molécule.

4. Procédé suivant l'une quelconque ou plusieurs des revendications 1 à 3, caractérisé en ce qu'il contient, à titre d'additif, des polymères choisis parmi les copolymères du monoxyde de carbone et du n-tétradécène-1, les copolymères du monoxyde de carbone et du n-hexadécène-1, les terpolymères du monoxyde de carbone, du n-tétradécène-1 et du n-octadécène-1 et les mélanges de copolymères du monoxyde de carbone et du n-tétradécène-1 et de copolymères du monoxyde de carbone et du n-hexadécène-1.

5. Procédé suivant l'une quelconque ou plusieurs des revendications 1 à 4, caractérisé en ce qu'il contient de 1 à 10.000 mg de polymère par kg d'huile hydrocarbonée.

6. Procédé de préparation des polymères du monoxyde de carbone avec une ou plusieurs $\alpha$-oléfines, lesquels polymères sont constitués de chaînes linéaires dans lesquelles, d'une part, les unités qui tirent leur origine du monoxyde de carbone et, d'autre part, les unités qui tirent leur origine d'une ou plusieurs $\alpha$-oléfines comportant au moins 10 atomes de carbone par molécule ($\alpha$-oléfines en $C_{10+}$) se présentent d'une manière alternante et lesquels polymères possèdent un poids moléculaire moyen en poids ($\overline{M}_p$) supérieur à $10^4$, lequel procédé comprend la mise en contact des monomères, à température et pression élevées et en présence d'un diluant constitué pour plus de 90% en volume d'un liquide aprotique, avec une composition catalytique contenant un métal du groupe VIII, en particulier le palladium et un ligand bidenté du phosphore répondant à la formule générale $(R^1R^2P)_2R$ dans laquelle $R^1$ et $R^2$ représentent des radicaux hydrocarbyle aliphatiques à substitution polaire éventuelle, identiques ou différents et R représente un groupe de pontage organique bivalent contenant au moins deux atomes de carbone dans le pont liant les deux atomes de phosphore.

7. Procédé suivant la revendication 6, caractérisé en ce qu'on l'entreprend à une température de 25 à 150°C, une pression de 2 à 150 bars et un rapport molaire des oléfines par rapport au monoxyde de carbone compris entre 10:1 et 1:10 et en ce que, par mole d'oléfine à polymériser, on utilise une proportion de composition catalytique qui contient entre $10^{-7}$ et $10^{-3}$ atomegramme de métal du groupe VIII.

8. Procédé suivant la revendication 6 ou 7, caractérisé en ce que l'$\alpha$-oléfine en $C_{10+}$ utilisée à titre de monomère joue également le rôle de liquide aprotique.